(19) Europäisches Patentamt
European Patent Office
Office européen des brevets

(11) **EP 2 159 600 A1**

(12) **EUROPÄISCHE PATENTANMELDUNG**

(43) Veröffentlichungstag:
**03.03.2010 Patentblatt 2010/09**

(51) Int Cl.:
***G01S 7/486*** *(2006.01)*

(21) Anmeldenummer: 08163195.4

(22) Anmeldetag: **28.08.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **ELMOS Semiconductor AG**
**44227 Dortmund (DE)**

(72) Erfinder: **Spiegel, Egbert**
**45891 Gelsenkirchen (DE)**

(74) Vertreter: **Hilleringmann, Jochen**
**Patentanwälte**
**von Kreisler-Selting-Werner**
**Bahnhofsvorplatz 1**
**50667 Köln (DE)**

(54) **Elektro-optischer Detektor zur Erkennung des Vorhandenseins und/oder der Annäherung eines Objekts**

(57) Der elektro-optischer Detektor zu Erkennung des Vorhandenseins und/oder der Annäherung eines Objekts, insbesondere einer Hand oder eines Fingers in einem Erfassungsbereich, ist versehen mit einer Sendeeinheit (10) zur Aussendung elektro-magnetischer Strahlung, einer Empfangseinheit (18) zum Empfang der von der Sendeeinheit (10) ausgesendeten und von dem zu detektierenden Objekt (12) reflektierten elektro-magnetischen Strahlung und zur Ausgabe eines die Intensität der empfangenen Strahlung repräsentierenden Messsignals, einer Kompensationseinheit (16), die zur Kompensation von von der Empfangseinheit (18) empfangener, jedoch nicht von der Sendeeinheit (10) ausgesendeter elektro-magnetischer Strahlung ein Kompensationssignal ausgibt, und einer Auswerteeinheit (24), die anhand der Größe des Kompensationssignals ein das Vorhandensein und/oder die Annäherung des Objekts repräsentierendes Ausgangssignal erzeugt. Die Kompensationseinheit (16) ist von der Auswerteeinheit (24) zur Erzeugung eines Kompensationssignals ansteuerbar und die Überlagerung aus Messsignal und Kompensationssignal zu Null ausregelt. Die Kompensationseinheit (16) weist eine durch ein Ansteuersignal steuerbare Stromquelle (26) zur Erzeugung eines Stromsignals veränderbarer Größe als Kompensationssignal auf. Das Stromsignal ist dem Messsignal der Empfangseinheit (18) überlagerbar und das so entstehende Überlagerungssignal ist durch Ansteuerung der Stromquelle (28) zu Null ausregelbar, wobei das Ansteuersignal der Stromquelle (26) der Auswerteeinheit (24) zuführbar ist.

**Fig.3**

**Beschreibung**

Die Erfindung betrifft einen elektro-optischen Detektor zur Erkennung des Vorhandenseins und/oder der Annäherung eines Objekts, insbesondere einer Hand oder eines Fingers in einem Erfassungsbereich.

Für die berührungslose Detektion des Vorhandenseins eines Objekts, z.B. einer Hand, innerhalb eines Erfassungsbereichs und/oder die Annäherung eines Objekts sind neben kapazitiven Detektoren auch optisch arbeitende Detektoren bekannt. Ein Beispiel für einen optischen Detektor ist im Stand der Technik unter HALIOS® bekannt und z.B. in DE-C-100 01 943, DE-A-102 56 429 und DE-B-103 00 223 beschrieben.

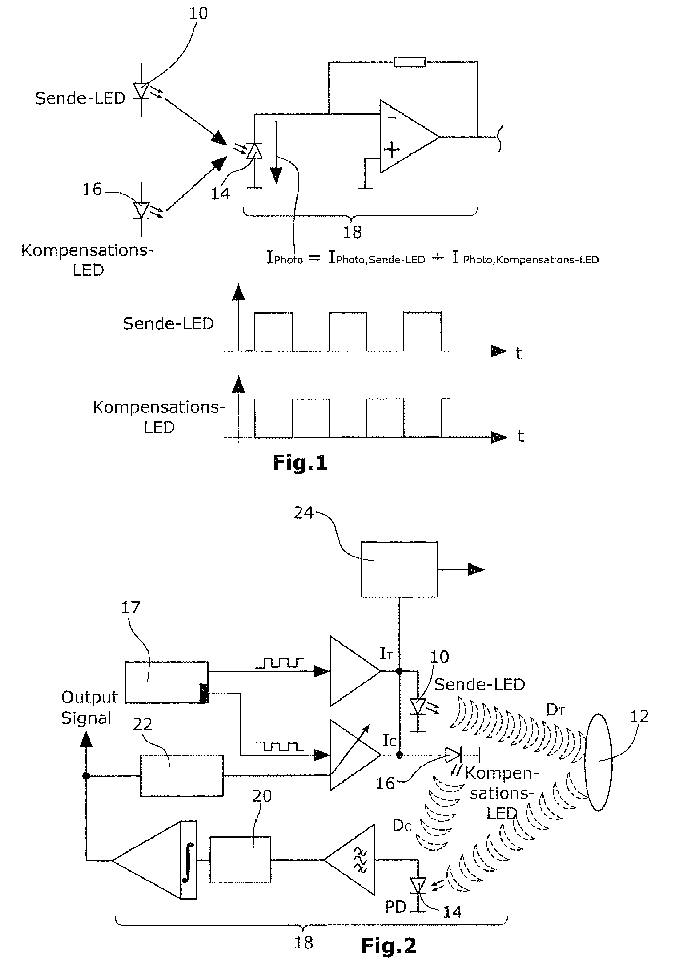

Das HALIOS®-System soll nachfolgend anhand der Fign. 1 und 2 beschrieben werden, wobei Fig. 1 die Eingangsbeschaltung ohne Regelschaltung und Fig. 2 den vollständigen Regelkreis zeigt.

Der HALIOS®-Regelkreis besteht aus zwei LEDs, einer Photodiode mit Verstärker, einem Synchrondemodulator und einem PI-Regler. In Fig. 2 ist die Verschalung dieser Elemente dargestellt.

Die Sende-LED 10 strahlt rechteckförmig amplitudenmoduliertes Licht aus. Über eine Reflexion am Objekt 12 gelangt ein Teil dieses Lichtes zur Photodiode 14. Eine zweite LED, die Kompensations-LED 16, sendet ebenfalls reckteckförmig amplitudenmoduliertes Licht zur Photodiode 14, das aber um genau 180° phasenversetzt ist. Hierzu dient eine Ansteuereinheit 17 mit z.B. einem Oszillator und einem Inverter. In der Empfangseinheit 18 überlagern sich beide Lichtsignale und heben sich, falls sie genau die gleiche Amplitude aufweisen, zu einem Gleichsignal auf.

Der Synchrondemodulator 20 kann so einfach detektieren, welche LED zu stark sendet. Diese Information führt er dem Regler 22 zu, welcher die Sendeamplitude der Kompensations-LED 16 so anpasst, dass sich das Empfangssignal wieder zu Null ergänzt (Regelbedingung).

Ändert sich nun die Position des Objektes 12, wird hierdurch eine Änderung des Lichtanteiles, welcher von der Sende-LED 10 zur Photodiode 14 gelangt, hervorgerufen. Dies bewirkt unmittelbar ein Nachführen der Intensität der Kompensations-LED 16 durch den Regler 22, um weiterhin die Regelbedingung zu erfüllen. Dieses Nachstellen bewirkt eine Änderung im als Ausgangssignal fungierenden Regelsignal. Damit stellt das Regelsignal ein Maß für die Reflexion des Objektes 12 dar.

Die Regelbedingung lautet mit den in Fig. 2 eingeführten Symbolen:

$$f_{PD}(I_C \cdot \eta_C \cdot D_C) = f_{PD}(I_T \cdot \eta_T \cdot D_T)$$

$$\text{(Gleichung 1)}$$

mit dem Strom I, dem Wirkungsgrad $\eta$ und der optischen Kopplung D der Kompensations- bzw. Sende-LED.

Da die Transferfunktion $f_{PD}$ für beide Signale identisch und monoton ist, gilt:

$$I_C \cdot \eta_C \cdot D_C = I_T \cdot \eta_T \cdot D_T$$

$$\text{(Gleichung 2)}$$

Nach Fig. 2 ist der Sendestrom der LED 10 konstant. Damit gilt (bei $I_T = I_0$):

$$I_C = \frac{I_0 \cdot \eta_T}{\eta_C \cdot D_C} \cdot D_T$$

$$\text{(Gleichung 3)}$$

Wie man aus Gleichung 3 erkennt, ist das die Kompensations-LED 16 ansteuernde Signal ($I_C$) direkt proportional zur optischen Kopplung $D_T$ und damit ein Maß für den Abstand des Objts bzw. Anzeichen dafür, dass sich ein Objekt im Erfassungsbereich des Detektors befindet, was in einer Auswerteeinheit 24 ausgewertet wird.

Ein Vorteil von HALIOS® besteht darin, dass das Empfangssignal stets maximal verstärkt werden kann, da im ausgeregelten Fall der Wechselanteil Null beträgt. Somit ist das System stets maximal empfindlich, Da der Verstärkerpfad entfällt (siehe Gleichung 2), sind die genauen Eigenschaften des Verstärkers und deren Änderungen über die Zeit nicht relevant.

Durch die Eliminierung des Empfangspfades aus der Messung bei gleichzeitiger Anwendung des Kompensationsprinzips (Waageprinzips) wird mit HALIOS® eine wesentliche Verbesserung von reflektiv und absorptiv arbeitenden Messsystemen erreicht. Insbesondere wird dabei das Problem der Umgebungslichtsensitivität gelöst. Somit lassen sich mit HALIOS® kostengünstige alltagstaugliche optische Sensorsysteme in bisher nicht gewohnter Qualität herstellen.

Ein gewisser Nachteil ist allerdings, dass mit der Kompensations-LED ein elektro-optisches Bauteil erforderlich ist, das relativ zur Photodiode (Empfangsdiode) derart angeordnet sein muss, dass beide optisch gekoppelt sind. Dies bedeutet einen konstruktiven Aufwand, wie er sich z.B. aus Fig. 9 in DE-C-100 01 943 ergibt; denn die Strahlung der Kompensations-LED muss auf die Photodiode von derselben Seite einfallen, wie die von dem Objekt reflektierte Strahlung der Sende-LED, darf aber nicht von dem Objekt reflektiert werden. Daher muss die Kompensations-LED zum Erfassungsbereich des Detektors hin abgedeckt werden, aber dennoch auf die Photodiode auftreffen. Diese Randbedingungen bedeuten eine Einschränkung der Designfreiheiten beim Entwurf eines Detektors, was insbesondere bei der Integration in ein IC-Gehäuse Probleme mit sich bringen kann.

Aufgabe der Erfindung ist es, einen Detektor zur Erkennung des Vorhandenseins und/oder der Annäherung eines Objekts, insbesondere einer Hand oder eines Fingers mit einem Erfassungsbereich, zu schaffen, der eine vereinfachte Hardware aufweist, ohne auf die Vorteile des HALIOS®-Systems verzichten zu müssen.

Zur Lösung dieser Aufgabe wird mit der Erfindung ein Detektor zur Erkennung des Vorhandenseins und/oder der Annäherung eines Objekts, insbesondere einer Hand oder eines Fingers mit einem Erfassungsbereich, vorgeschlagen, wobei der Detektor versehen ist mit

- einer Sendeeinheit zur Aussendung elektro-magnetischer Strahlung,
- einer Empfangseinheit zum Empfang der von der Sendeeinheit ausgesendeten und von dem zu detektierenden Objekt reflektierten elektro-magnetischen Strahlung und zur Ausgabe eines die Intensität der empfangenen Strahlung repräsentierenden Messsignals,
- einer Kompensationseinheit, die zur Kompensation von von der Empfangseinheit empfangener, jedoch nicht von der Sendeeinheit ausgesendeter elektro-magnetischer Strahlung ein Kompensationssignal ausgibt, und
- einer Auswerteeinheit, die anhand der Größe des Kompensationssignals ein das Vorhandensein und/oder die Annäherung des Objekts repräsentierendes Ausgangssignal erzeugt,
- wobei die Kompensationseinheit von der Auswerteeinheit zur Erzeugung eines Kompensationssignals ansteuerbar ist und die Überlagerung aus Messsignal und Kompensationssignal zu Null ausregelt.

Bei diesem Detektor ist erfindungsgemäß vorgesehen,

- dass die Kompensationseinheit eine durch ein Ansteuersignal steuerbare Stromquelle zur Erzeugung eines Stromsignals veränderbarer Größe als Kompensationssignal aufweist, und
- dass das Stromsignal dem Messsignal der Empfangseinheit überlagerbar ist und das so entstehende Überlagerungssignal durch Ansteuerung der Stromquelle zu Null ausregelbar ist, wobei das Ansteuersignal der Stromquelle der Auswerteeinheit zuführbar ist.

Hauptaspekt der Erfindung ist, dass die Kompensationseinheit nicht mehr optisch sondern rein elektrisch arbeitet, indem der von der Kompensations-LED des HALIOS®-Systems in der Empfangs-Photodiode verursachte Photostrom auf elektrischem Wege direkt in den Empfänger eingespeist wird. Hierzu weist die Kompensationseinheit des erfindungsgemäßen Detektors eine Stromquelle auf. Damit entfallen die zweite LED und somit die obigen Schwierigkeiten bei der praktischen, konstruktiven Umsetzung des HALIOS®-Systems.

Die Ansteuerung der Sendeeinheit (insbesondere Sende-LED) und der Stromquelle (zur Erzeugung des Kompensations-Stromsignals) kann gleichzeitig oder alternierend (d.h. um 180° phasenverschoben) erfolgen.

Die Erfindung wird nachfolgend anhand zweier Ausführungsbeispiele der Erfindung und unter Verweis auf die Zeichnung näher erläutert. Im Einzelnen zeigen dabei:

Fign. 1 und 2    die Eingangsbeschaltung und den Regelkreis des bekannten optisch arbeitenden HALIOS®-Systems,

Fig. 3    ein erstes Ausführungsbeispiel mit rein elektrisch erzeugtem Kompen- sations-Stromsignal bei alternierender Ansteuerung von Sende- und Kompensationseinheit und

Fig. 4    ein zweites Ausführungsbeispiel mit rein elektrisch erzeugtem Kom- pensations-Stromsignal bei gleichzeitiger Ansteuerung von Sende- und Kompensationseinheit.

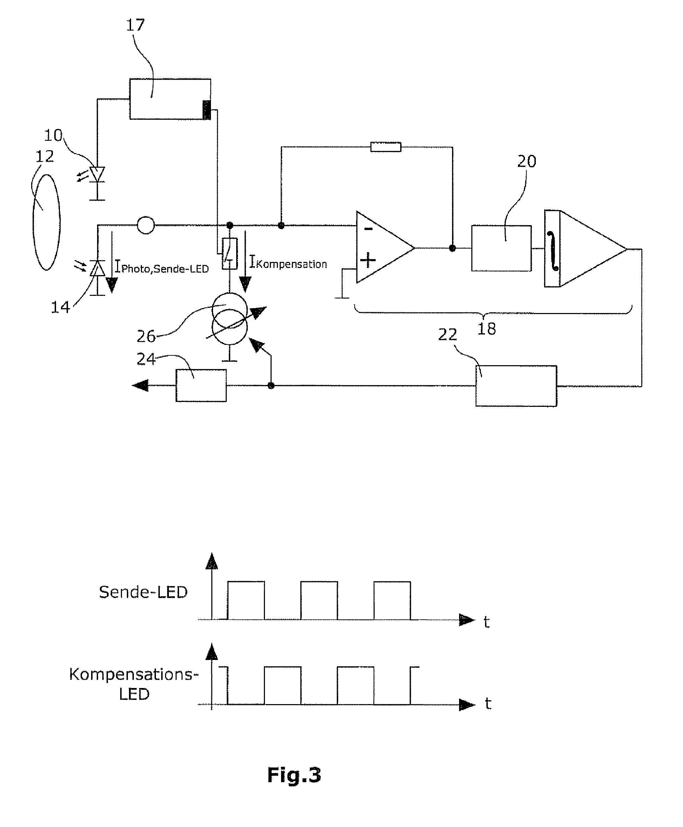

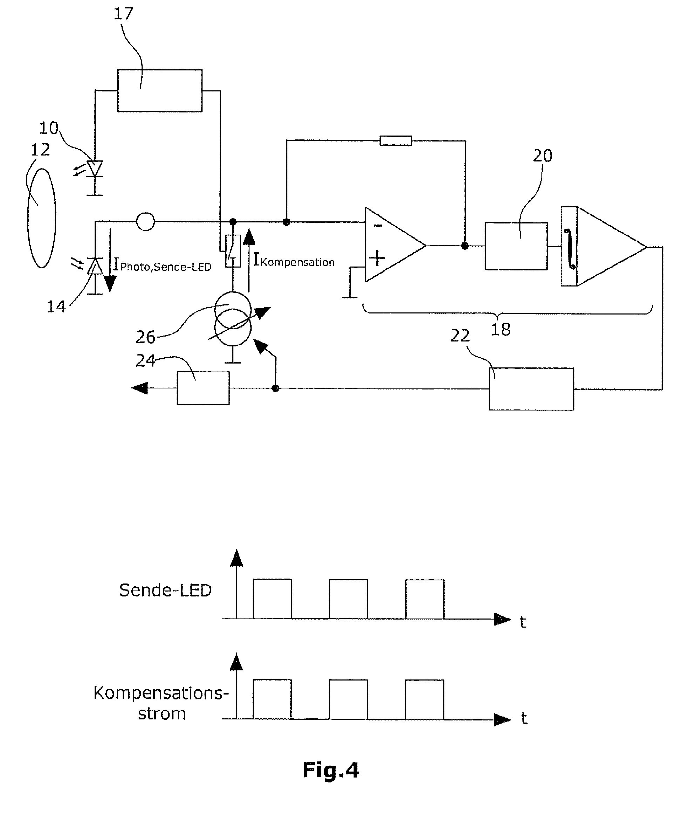

In den Fign. 3 und 4 sind zwei unterschiedliche Eingangsbeschaltungen eines Regelkreises eines optischen Detektors gezeigt, wobei die einzelnen Komponenten, sofern sie die gleiche Funktion wie beim HALIOS®-System aufweisen, mit den gleichen Bezugszeichen wie in Fig. 1 bezeichnet sind.

Im Unterscheid zum HALIOS®-System wird der Photostrom beim Detektor nach Fig. 3 und 4 durch einen elektrischen Strom "ersetzt", wozu eine regelbare Stromquelle 26 genutzt wird.

Wie bereits oben im Zusammenhang mit HALIOS® erläutert, ist es konstruktiv schwierig, die Kompensations-LED an die Photodiode optisch anzukoppeln. Außerdem existieren Anwendungen, bei denen die Empfindlichkeitsschwankungen der Photodiode nur eine untergeordnete Rolle spielen. In diesen Fällen ist es vorteilhaft und auch kostengünstiger, auf die Kompensations-LED zu verzichten und den durch die Kompensations-LED in der Empfangsphotodiode verursachten Photostrom auf elektrischem Wege in den Verstärkereingang zu speiser. Die Empfindlichkeitseigenschaften des Systems bleiben so in vollem Umfang enthalten. Dies ist z.B. in Fig. 3 dargestellt.

Eine Alternative ergibt sich, wenn die Stromrichtung der Kompensationsstromquelle 26 und gleichzeitig deren Taktphase umgedreht werden (siehe Fig. 4). Dadurch werden Sender und Kompensator gleichzeitig getaktet. Dieses Verfahren kann in Fällen, in denen mit großem Puls-Pausenverhältnis (quasi Einzelpulse) gearbeitet wird, angewendet werden, da das Einschwingen der internen RC-Kopplung der Verstärkerstufen bei der Demodulation nicht abgewartet werden muss. Das aber ist im vorherigen Fall (Fig. 3) auf Grund der sequentiellen Taktung notwendig.

**Patentansprüche**

1. Elektro-optischer Detektor zu Erkennung des Vorhandenseins und/oder der Annäherung eines Objekts, insbesondere einer Hand oder eines Fingers in einem Erfassungsbereich, mit

   - einer Sendeeinheit (10) zur Aussendung elektro-magnetischer Strahlung,
   - einer Empfangseinheit (18) zum Empfang der von der Sendeeinheit (10) ausgesendeten und von dem zu detektierenden Objekt (12) reflektierten elektro-magnetischen Strahlung und zur Ausgabe eines die Intensität der empfangenen Strahlung repräsentierenden Messsignals,
   - einer Kompensationseinheit (16), die zur Kompensation von von der Empfangseinheit (18) empfangener, jedoch nicht von der Sendeeinheit (10) ausgesendeter elektro-magnetischer Strahlung ein Kompensationssignal ausgibt, und
   - einer Auswerteeinheit (24), die anhand der Größe des Kompensationssignals ein das Vorhandensein und/oder die Annäherung des Objekts repräsentierendes Ausgangssignal erzeugt,
   - wobei die Kompensationseinheit (16) von der Auswerteeinheit (24) zur Erzeugung eines Kompensationssignals ansteuerbar ist und die Überlagerung aus Messsignal und Kompensationssignal zu Null ausregelt,
   **dadurch gekennzeichnet,**
   - **dass** die Kompensationseinheit (16) eine durch ein Ansteuersignal steuerbare Stromquelle (26) zur Erzeugung eines Stromsignals veränderbarer Größe als Kompensationssignal aufweist, und
   - **dass** das Stromsignal dem Messsignal der Empfangseinheit (18) überlagerbar ist und das so entstehende Überlagerungssignal durch Ansteuerung der Stromquelle (28) zu Null ausregelbar ist, wobei das Ansteuersignal der Stromquelle (26) der Auswerteeinheit (24) zuführbar ist.

2. Detektor nach Anspruch 1, **dadurch gekennzeichnet, dass** die Sendeeinheit (10) und die Kompensationseinheit (16) von einer Ansteuereinheit (17) zum alternierenden Aussenden der elektro-magnetischen Strahlung bzw. Erzeugen des Stromsignals wechselweise ansteuerbar sind.

3. Detektor nach Anspruch 1, **dadurch gekennzeichnet, dass** die Sendeeinheit (10) und die Kompensationseinheit (16) von einer Ansteuereinheit (17) zum gleichzeitigen Aussenden der elektro-magnetischen Strahlung bzw. Erzeugen des Stromsignals ansteuerbar sind.

Sende-LED

10

16

Kompensations-
LED

14

18

$$I_{Photo} = I_{Photo,Sende-LED} + I_{Photo,Kompensations-LED}$$

Sende-LED

t

Kompensations-
LED

t

**Fig.1**

24

17

Output
Signal

22

$I_T$

10

Sende-LED

$D_T$

12

$I_C$

16

Kompensations-
LED

$D_C$

20

PD

14

18

**Fig.2**

...

**Fig.3**

Fig.4

| Europäisches Patentamt / European Patent Office / Office européen des brevets | **EUROPÄISCHER RECHERCHENBERICHT** | Nummer der Anmeldung<br>EP 08 16 3195 |
| --- | --- | --- |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
| --- | --- | --- | --- |
| Y,D | DE 102 56 429 A1 (REIME GERD [DE]) 24. Juni 2004 (2004-06-24) * Zusammenfassung; Abbildung 1 * * Absatz [0024] - Absatz [0025] * ----- | 1-3 | INV. G01S7/486 |
| Y | US 6 285 288 B1 (LANGDON ROGER M [GB] ET AL) 4. September 2001 (2001-09-04) * Spalte 11, Zeile 15 - Zeile 34; Abbildung 5 * ----- | 1-3 | |
| A | WO 2005/054902 A (ME IN GMBH [DE]; RICHTER ANDRES [DE]; GROHMANN STEFAN [DE]; LUMMERZHEI) 16. Juni 2005 (2005-06-16) * Abbildung 2 * * Seite 9, Zeile 25 - Seite 10, Zeile 14 * ----- | 1 | |
| A | DE 197 27 459 A1 (SICK AG [DE]) 7. Januar 1999 (1999-01-07) * Zusammenfassung; Abbildung 1 * * Spalte 7, Zeile 42 - Zeile 55 * * Spalte 8, Zeile 37 - Zeile 50 * ----- | 1 | |

RECHERCHIERTE SACHGEBIETE (IPC)

G01S

Der vorliegende Recherchenbericht wurde für alle Patentansprüche erstellt

| Recherchenort | Abschlußdatum der Recherche | Prüfer |
| --- | --- | --- |
| Den Haag | 4. März 2009 | Niemeijer, Reint |

**ANHANG ZUM EUROPÄISCHEN RECHERCHENBERICHT**
**ÜBER DIE EUROPÄISCHE PATENTANMELDUNG NR.**

EP 08 16 3195

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-03-2009

| Im Recherchenbericht angeführtes Patentdokument | Datum der Veröffentlichung | Mitglied(er) der Patentfamilie | Datum der Veröffentlichung |
|---|---|---|---|
| DE 10256429 A1 | 24-06-2004 | EP 1426783 A1 | 09-06-2004 |
| US 6285288 B1 | 04-09-2001 | DE 69920312 D1<br>DE 69920312 T2<br>EP 0947834 A2<br>ES 2224550 T3<br>GB 2336050 A<br>IL 128984 A | 28-10-2004<br>17-02-2005<br>06-10-1999<br>01-03-2005<br>06-10-1999<br>10-03-2002 |
| WO 2005054902 A | 16-06-2005 | AU 2003298057 A1<br>US 2006214091 A1 | 24-06-2005<br>28-09-2006 |
| DE 19727459 A1 | 07-01-1999 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10001943 C
- DE 10256429 A
- DE 10300223 B